# EUROPEAN PATENT SPECIFICATION

(11) **EP 3 306 824 B1**
(45) Date of publication and mention of the grant of the patent: **01.12.2021**
(21) Application number: 16192943.5
(22) Date of filing: 07.10.2016
(51) Int. Cl.: H04B 1/10

(54) **METHOD FOR DETECTING AT LEAST ONE BROADBAND INTERFERER AND DETECTING SYSTEM**
VERFAHREN ZUR DETEKTION VON MINDESTENS EINEM BREITBANDSTÖRER UND DETEKTIONSSYSTEM
PROCÉDÉ DE DÉTECTION D'AU MOINS UN ÉMETTEUR BROUILLEUR À LARGE BANDE ET SYSTÈME DE DÉTECTION

(43) Date of publication of application: 11.04.2018
(73) Proprietor: Rohde & Schwarz GmbH & Co. KG, 81671 München (DE)
(72) Inventor: Buhl, Dr. Ulrike, 85567 Grafing (DE); Scharl, Peter, 81545 München (DE); Djula, Boris, 85551 Kirchheim b. München (DE)
(74) Representative: Prinz & Partner mbB

(56) References cited:
- WO-A1-2015/144649
- CN-A- 103 558 597
- US-A1- 2014 070 983
- ANTONI ET AL: "The spectral kurtosis: a useful tool for characterising non-stationary signals", MECHANICAL SYSTEMS AND SIGNAL PROCESSING, ELSEVIER, AMSTERDAM, NL, vol. 20, no. 2, 1 February 2006 (2006-02-01), pages 282-307, XP024930294, ISSN: 0888-3270, DOI: 10.1016/J.YMSSP.2004.09.001 [retrieved on 2006-02-01]

## Description

The invention relates to a method for detecting at least one broadband interferer as well as a detecting system in a time-frequency area.

In general, a broadband interferer like a radar signal may emit broadband frequency-modulated signals which cover the frequency range to be analyzed at least partly. Thus, the broadband interferer may disturb the detection of other more narrowband signals to be analyzed such that these signals cannot be evaluated automatically. For instance, broadband disturbing signals, also called chirps, are used by scientists for investigating the ionosphere. The chirp signals may be linear or non-linear with regard to the time-dependency of their frequency. Specific chirp signals are also called transients.

Before analyzing other signals in a time-frequency area or a time-frequency plane, the position of the interferer has to be determined by marking relevant points corresponding to the chirp signal in a time-frequency area of the detected signals. Usually, the signal points corresponding to the broadband interferer can be distinguished by human eye in such a time-frequency area. However, an automatic detection and separation of the various time-frequency points is not possible in an easy and automatic manner with minimum effort, in particular the processing power might grow prohibitively.

However, different methods and techniques are known to support the identifying process of a broadband interferer in the time-frequency area to a certain extent.

First, significant points that contain all types of signals have to be determined. One technique relates to determining significant points by using threshold values for energy. Thus, points which exceed a predetermined threshold value of energy are used for further processing. However, low energy signals to be analyzed will not be processed.

Another technique relates to a statistical measure, the spectral kurtosis, wherein complete significant frequency bins in the time-frequency area are determined instead of significant time-frequency points. In general, the spectral kurtosis is a statistical measure for identifying signals which occur in a certain frequency bin for a short time. The shorter the signal occurs in the dedicated frequency bin, the better it can be detected by using the spectral kurtosis. It is known that a chirp signal occurs for a very short time. Thus, the spectral kurtosis is suitable for detecting significant frequency bins comprising a chirp signal. Limiting the temporal position of a signal within a frequency bin or distinguishing chirp signals from other temporal short signals is however not possible by the spectral kurtosis.

After significant points or significant frequency bins have been identified, these points or bins have to be analyzed to distinguish chirps from other signals. For this purpose, different techniques are known.

For instance, a Radon transform is used to identify chirp signals within significant points wherein the Radon transform is a mathematical integral transform. However, the Radon transform is computationally intensive and it is only applicable for linear chirp signals.

In addition, image processing algorithms like Sobel filtering could also identify chirp signals within the significant points. They are however only applicable if the time-frequency slope of the chirp can be estimated beforehand. Otherwise, the filter tap length and thus the computational complexity grow prohibitively.. Moreover, they are also only applicable for linear signals.

Further, cluster algorithms are known that combine significant points in the time-frequency area to so called cluster regions. These algorithms are however not able to separate significant points that belong to chirp signals from neighboring significant points of other signals.

The above mentioned techniques and methods are only used to support the distinguishing process. However, they are not applicable in a fully automated detection system due to their computational complexity or due to shortcomings in the outcome.

In CN 103 558 597 A, a method for detecting a dim target in sea clutter on the basis of spectrum kurtosis is described wherein a time-Doppler spectrum is obtained by echo sequences of distance elements after short-time Fourier transform.

US 2014/070983 A1 describes a method and a system comprising a spectral feature engine and a chirp detecting engine wherein based on the spectral detection density of the noisy signal, the chirp detecting engine detects multiple channel-induced and target-induced chirps present in the noisy signal.

In WO 2015/144649 A1, a method for detecting a target signal in a measurement signal of an instrument is described, wherein the instrument is installed on a spacecraft engine. The measurement signal obtained is divided into blocks of samples so that several fractional signals by fractional Fourier transforms of said block of samples are calculated wherein these several fractional signals obtained by the fractional Fourier transforms have respectively different transformation angles.

The invention provides a method for detecting at least one broadband interferer with the following steps:
- Determining a time-frequency area of incoming signals by means of a spectrogram of incoming signals,
- Using spectral kurtosis such that a spectral kurtosis value is calculated for each frequency bin of the incoming signals,
- Identifying the significant frequency bins which might comprise signal points of at least one possible broadband interferer in the time-frequency area by investigating the calculated spectral kurtosis values of the significant frequency bins during the spectral kurtosis
- Performing a time domain analysis in order to identify significant points of the significant frequency bins which have been investigated by spectral kurtosis previously, and
- Evaluating the significant points in order to determine whether these significant points correspond to at least one broadband interferer, wherein significant points which do not comply with predetermined criterions for broadband interferer are removed during and/or after the evaluating step.

The invention further provides a detecting system wherein the detecting system is configured such that a method as mentioned above can be performed.

The invention is based on the finding that rules are defined such that a detecting system can process the above mentioned several steps in order to detect at least one broadband interferer signal regardless of its characteristics. Afterwards, the signal can be suppressed such that the spectrum obtained can be evaluated automatically. Thus, linear and non-linear broadband signals of the broadband interferer can be detected and suppressed.

In general, the method is based on the knowledge that chirp signals only occur for a short time in a certain frequency bin. The spectral kurtosis value of a frequency bin comprising a chirp signal is recognizable since a chirp signal only occurs for a short time in the dedicated frequency bin due to its time-varying frequency. Accordingly, the spectral kurtosis can be used to mark and identify significant frequency bins in the time-frequency area which can be gathered by a Fourier transformation, for instance. During the spectral kurtosis, significant frequency bins are determined by investigating the calculated spectral kurtosis values. Hence, the significant frequency bins are identified which might comprise signal points of at least one possible broadband interferer in the time-frequency area or rather the time-frequency plane.

In addition to the spectral kurtosis, a time domain analysis is performed afterwards such that significant points in each significant frequency bin are marked or rather cut out for further processing. In a first approach, the revealed significant points are deemed to be part of a chirp signal. Thus, the other signals or rather signal points in each frequency bin are not suppressed as only the significant points are identified by performing the time domain analysis. In fact, the significant points which are deemed to relate to a broadband interferer are identified and cut-out or rather selected from all received signal points such that only these significant points are used for further processing, in particular identifying chirp signals. Thus, it is ensured that the other signals in the frequency bins can be analyzed afterwards.

For instance, only those frequency bins are analyzed which have been identified as being significant previously.

The evaluating process is improved as only signal points are used during the evaluation which might be signal points of a chirp signal. The determination of at least one chirp signal is improved accordingly.

According to an aspect, a constant false alarm rate (CFAR) algorithm is inter alia used for removing the significant points which do not comply with predetermined criterions for broadband interferer.

According to another aspect, at least one fit function is determined for the significant points in a fit process during the evaluating step in order to determine whether the interfering signal is a linear chirp signal, a non-linear chirp signal or a random portion of a wanted signal. Signal points corresponding to a chirp signal follow a certain function in the time-frequency area. Thus, performing a fit process reveals which of the significant points belong to a chirp signal and which ones are (random) portions of wanted signals. The portions of wanted signals might also be of interest.

Particularly, the fit process is a two-step process wherein fit functions are fitted at least twice. This improves the reliability of the fit process.

Moreover the deviations of the separated significant points with respect to the first fit function can be determined. Signal points having a small deviation can be deemed to belong to a chirp signal.

According to another aspect, a predefined number of significant points having the smallest deviation are determined, in particular 80 % of the significant points. These significant points are deemed to belong to a chirp signal as they are the significant points which can be approximated by a curve most suitable. Other percentage quotations are also suitable. The percentage quotation may be set by the manufacturer. Particularly, the percentage quotation is set such that the user cannot change its value.

Alternatively, the percentage quotation is preset by the manufacturer, but it may be changed by the user upon a user interaction.

In particular, the significant points having the smallest deviation with respect to the first fit function are fitted again with a second fit function. As the points having the smallest deviation are the most promising candidates of a chirp signal, they are fitted again in order to obtain a most suitable fit function for the chirp signal.

Further, the deviations of all significant points with respect to the second fit function may be determined. After the second fit, the deviations of all significant points are determined with respect to the second fit function, in particular either the ones being not used for determining the second fit function. Thus, the deviations of the predefined number of significant points having the smallest deviation as well as the others are determined with respect to the second fit function.

Those significant points may be removed which have a deviation with respect to the fit function that is higher than a preset value. The preset value can be applied after the first fit process and/or the second fit process. Accordingly, the deviations of the significant points with respect to the first fit function and/or the second fit function are determined wherein different preset values may be used for the first and the second fit functions. Thus, significant points having a deviation from the fit functions being higher than a preset value are removed as these points are deemed to be part of wanted signals. These removed significant points are no longer used for further processing. Usually, this step is only performed after the second fit process.

In particular, quadratic functions are used as fit functions. Usually, chirp signals can be described by quadratic functions. Accordingly, these functions are used for determining whether the significant points belong to at least one chirp signal or not.

In general, suitable functions are used as fit functions. Thus, exponential functions, natural exponential functions and/or polynomial functions may also be used as fit functions.

According to another aspect, a threshold number for significant points is predetermined wherein all significant points are removed if this threshold number has not been reached. The detection of chirp signal points is stopped when the threshold number of significant points is not reached at any process step during the evaluation. Thus, it is ensured that the fit function is not forced to match on the signal points received. It is an indication that no chirp signal is provided when the threshold number is not exceeded during any of these steps. For instance, the deviations of many significant points are higher than the preset value.

Further, the significant points still remaining after the evaluation step may be deemed to belong to an interferer wherein these significant points are replaced by random noise. All the remaining significant points are deemed to belong to a chirp signal and, thus, these significant points are replaced by random noise such that the received time-frequency area does not comprise chirp signal points anymore which disturb the automatic analysis of the received signals.

Generally, the remaining significant points were within the predefined number of significant points having the smallest deviation with respect to the second fit function. Moreover, the threshold number has been reached during each step as the analysis would have been stopped otherwise.

According to another aspect, the steps are performed completely automatically. Hence, a manual interaction is not necessary which reduces the error rate and, further, improves the application. The user has only to switch on the detecting system and the signals received by the detecting system are processed automatically such that signal portions belonging to an interferer are removed and replaced by random noise. Thus, the obtained time-frequency area can be evaluated automatically.

According to a certain embodiment, a manual interaction is not possible, particularly if the percentage quotation is preset by the manufacturer such that the user cannot amend the value as mentioned above.

Generally, different chirp signals, for instance chirp signals of two or more different emitters, may be detected. Accordingly, the time-frequency area is analyzed in order to evaluate the number of possible emitters. Then, the obtained significant points in the time-frequency area are assigned to the different chirp signals. Hence, different fit functions have to be determined for the different chirp signals, in particular chirp signals of different emitters.

The detecting system comprises a processing unit which is configured to perform a method as mentioned above. The processing unit executes the different analysis and evaluation steps such that a detecting system is provided which operates autonomously.

The invention will now be described with reference to a preferred embodiment which is shown in the enclosed drawings. In the drawings,
- Figure 1 shows a detecting system for detecting a broadband interferer according to the invention,
- Figure 2 shows a time-frequency area wherein a chirp signal is visible, and
- Figure 3 shows a flow chart of a method for detecting a broadband interferer according to the invention.

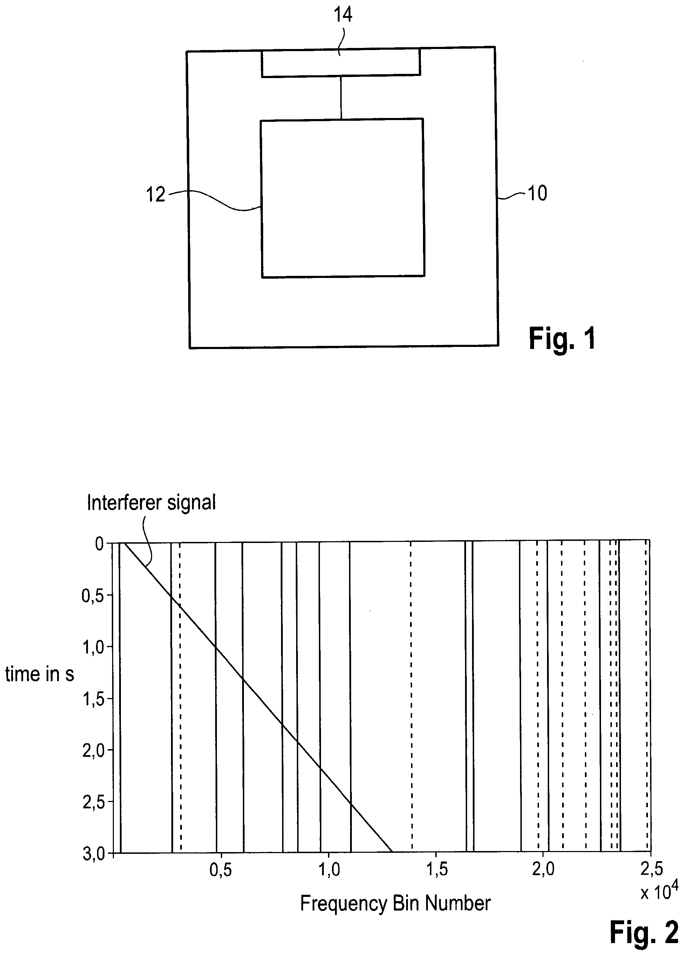

In Figure 1, a detecting system 10 for automatically detecting at least one broadband interferer is shown. A signal of a broadband interferer in a time-frequency area is shown in Figure 2 wherein the time-frequency area comprises several signals, in particular a signal of a broadband interferer being a chirp signal. A chirp signal is a broadband frequency modulated signal. Thus, the frequency of the chirp signal varies with the time as can be seen.

Generally, a time-frequency area may also be called time-frequency plane.

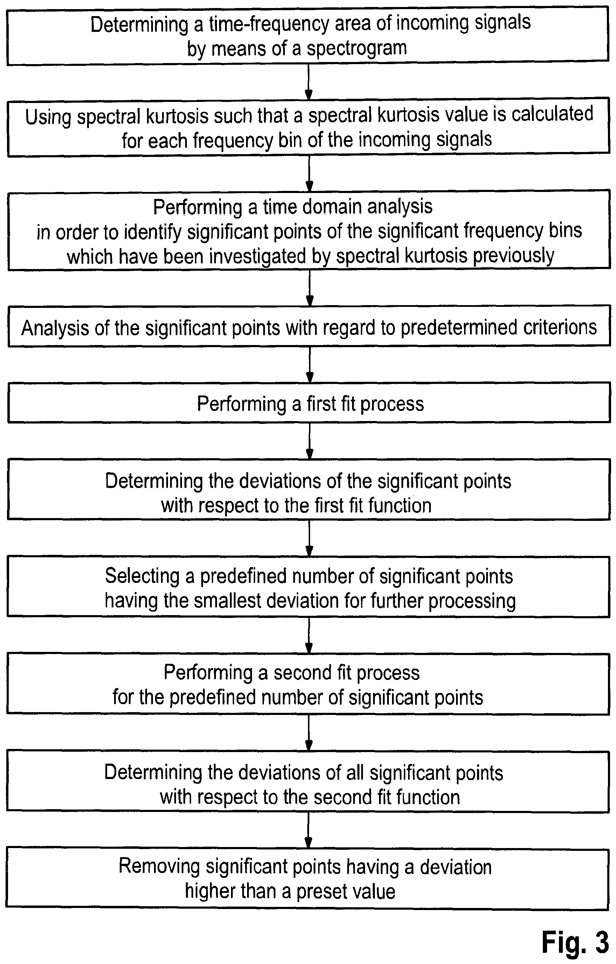

The detecting system 10 comprises inter alia a processing unit 12 which is configured to perform a method for detecting a broadband interferer automatically as will be described hereinafter with respect to Figure 3. The processing unit 12 is connected with an antenna system 14 used for receiving the incoming signals.

In Figure 3, a flow chart is shown which represents a preferred embodiment of the method, in particular the different steps, for detecting and identifying a broadband interferer automatically.

First, a time-frequency area of the incoming signals is determined by means of a spectrogram.

Then, spectral kurtosis is used such that a spectral kurtosis value for each frequency bin of the incoming signals is determined. Thus, frequency bins can be identified which might comprise at least one chirp signal or rather signals of a broadband interferer. These significant frequency bins can be determined since chirp signals only occur for a short time in a certain frequency bin due to their time-varying frequency characteristics. Accordingly, the spectral kurtosis value is large when a chirp signal occurs in the dedicated frequency bin. Generally, the spectral kurtosis value is a mathematical measure.

Afterwards, a time domain analysis is performed in order to identify significant points within the frequency bins. Accordingly, the significant points identified are marked or rather selected for further processing as will be described hereinafter. In a first approach, these significant points are deemed to belong to a signal of a broadband interferer, for instance a chirp signal. Accordingly, the individual signal points in the time-frequency area are selected or rather cut out from the significant frequency bins.

As already mentioned, a large spectral kurtosis value is an indicator for a frequency bin comprising a signal which only occurs for a short time in the dedicated frequency bin such as a chirp signal.

After the significant points have been determined in a first approach, these significant points are investigated regarding their characteristics, in particular it is investigated if they comply with predetermined criterions for broadband interferer. This analyzing step may comprise a constant false alarm rate (CFAR) algorithm. If significant points are determined which do not comply with the predetermined criterions, these points are removed as they probably do not belong to a chirp signal. In fact, these points may be random portions of a wanted signal. However, such random portions may be of interest as will be described later.

The significant points complying with the predetermined criterions are subjected to a fit process, in particular a two step fit process in order to determine whether these points are part of a linear chirp signal, a non-linear chirp signal or a random portion of a wanted signal.

During the fit process, a first fit function being a quadratic function is determined. Alternatively, an exponential function, a natural exponential function and/or a polynomial function may be used.

Then, a predefined number of significant points having the smallest deviation from the first fit function are determined which will be used for further processing. For instance, the 80 % of the significant points having the smallest deviation are selected for further processing.

These selected points are fitted again by determining a second fit function being a quadratic function. Alternatively, an exponential function, a natural exponential function and/or a polynomial function may be used as second fit function. Then, all significant points complying with the predetermined criterions, e.g. the 80 % having the smallest deviation with regard to the first fit function as well as the remaining 20 %, are used wherein their deviation with respect to the second fit function are determined.

Generally, different functions may be tested as fit functions in order to find the kind of function which is most suitable to fit the significant points (first fit function) and the selected points (second fit function), respectively.

Then, these deviations with regard to the second fit function are evaluated such that those significant points having a deviation being higher than a preset value are removed from further consideration. Significant points which have a large deviation with respect to the second fit function are deemed to be not part of a chirp signal.

The still remaining significant points are deemed to be interfering signal portions, in particular belonging to a broadband interferer or rather a chirp signal. Accordingly, these still remaining significant points are replaced by random noise such that the obtained time-frequency area does not contain any signal portions of an interferer or chirp signal.

Afterwards, the received signals, in particular the time-frequency area obtained after removing the signal portions belonging to at least one interferer, can be evaluated and analyzed automatically as no more chirp signal points are provided which impair the evaluation and analyzing step of the signals to be analyzed. As only chirp signal points have been replaced by random noise, (random) portions of wanted signals which might have information can still be analyzed.

Furthermore, a threshold number can be set for the significant points.

Should the number of significant points be less than the threshold number during any of the evaluation and/or analyzing steps mentioned above, all significant points are removed instead of the predefined number as it is assumed that no chirp signal has been received. This ensures that no random portions of wanted signals are replaced by random noise as these random parts might also be interesting regarding analysis purposes.

Furthermore, different chirp signals, in particular chirp signals of two or more emitters, may be detected. Hence, the significant points in the time-frequency area are analyzed previously in order to determine or rather estimate the number of possible emitters. Then, the obtained significant points in the time-frequency area are assigned to the determined or rather estimated number of emitters. Afterwards, a fit function has to be determined for each different chirp signal.

Hence, the significant points are evaluated or analyzed by closed mathematical functions or expressions.

Accordingly, a fully automatic detection of at least one chirp signal as well as their replacement is provided such that the evaluation and analysis of the signals to be analyzed can be performed subsequently without any manual interaction. In addition, the required computational power is low which in turn reduces the costs of the detecting system as well as the method for detecting at least one broadband interferer.

Thus, real-time processing is possible with a device having low performance such as a common personal computer or a notebook. Hence, a cloud-based computer system, a data center or a high-performance computer is not necessary for detecting chirp signals fully automatically. The device corresponds to the detecting system or it is at least part of the detecting system.

## Claims

1. Method for detecting at least one broadband interferer with the following steps:
a) Determining a time-frequency area of incoming signals by means of a spectrogram of incoming signals,
b) Using spectral kurtosis such that a spectral kurtosis value is calculated for each frequency bin of the incoming signals,
c) Identifying the significant frequency bins which might comprise signal points of at least one possible broadband interferer in the time-frequency area by investigating the calculated spectral kurtosis values of the significant frequency bins during the spectral kurtosis,
d) Performing a time domain analysis in order to identify significant points of the significant frequency bins which have been investigated by spectral kurtosis previously, and
e) Evaluating the significant points in order to determine whether these significant points correspond to at least one broadband interferer, wherein significant points which do not comply with predetermined criterions for broadband interferer are removed during and/or after the evaluating step.

2. Method according to claim 1, **characterized in that** a constant false alarm rate (CFAR) algorithm is inter alia used for the removing significant points which do not comply with predetermined criterions for broadband interferer.

3. Method according to claim 1 or 2, **characterized in that** at least one fit function is determined for the significant points in a fit process during the evaluating step in order to determine whether the interfering signal is a linear chirp signal, a non-linear chirp signal or a random portion of a wanted signal.

4. Method according to claim 3, **characterized in that** the fit process is a two-step process wherein fit functions are fitted at least twice.

5. Method according to claim 3 or 4, **characterized in that** the deviations of the significant points with respect to the first fit function are determined.

6. Method according to claim 5, **characterized in that** a predefined number of significant points having the smallest deviation are determined, in particular 80 % of the significant points.

7. Method according to claim 5 or 6, **characterized in that** the significant points having the smallest deviation to the first fit function are fitted again with a second fit function.

8. Method according to claim 7, **characterized in that** the deviations of all significant points with respect to the second fit function are determined.

9. Method according to any of claims 5 to 8, **characterized in that** significant points are removed which have a deviation with respect to the fit function that is higher than a preset value.

10. Method according to any of the claims 3 to 9, **characterized in that** quadratic functions are used as fit functions.

11. Method according to any of the preceding claims, **characterized in that** a threshold number for significant points is predetermined wherein all significant points are removed if this threshold number has not been reached.

12. Method according to any of the preceding claims, **characterized in that** the significant points still remaining after the evaluation step are deemed to belong to an interferer wherein these significant points are replaced by random noise.

13. Method according to any of the preceding claims, **characterized in that** the steps are performed completely automatically.

14. Detecting system (10) wherein the detecting system (10) comprises a processing unit (12) which is configured to perform a method according to any of the claims 1 to 13.

## Patentansprüche

1. Verfahren zum Detektieren von mindestens einem Breitbandstörer mit den folgenden Schritten:
a) Bestimmen eines Zeitfrequenzbereichs von ankommenden Signalen mittels eines Spektogramms von ankommenden Signalen,
b) Verwenden einer spektralen Kurtosis, derart, dass für jeden Frequenzbin der ankommenden Signale ein spektraler Kurtosiswert berechnet wird,
c) Identifizieren der signifikanten Frequenzbins, die Signalpunkte mindestens eines möglichen Breitbandstörers im Zeitfrequenzbereich umfassen könnten, durch Untersuchen der berechneten spektralen Kurtosiswerte der signifikanten Frequenzbins während der spektralen Kurtosis,
d) Durchführen einer Zeitdomänenanalyse, um signifikante Punkte der signifikanten Frequenzbins, die zuvor mittels spektraler Kurtosis untersucht wurden, zu identifizieren, und
e) Beurteilen der signifikanten Punkte, um zu bestimmen, ob diese signifikanten Punkte mindestens einem Breitbandstörer entsprechen, wobei signifikante Punkte, die vorbestimmte Kriterien für einen Breitbandstörer nicht erfüllen, während und/oder nach dem Beurteilungsschritt entfernt werden.

2. Verfahren nach Anspruch 1, **dadurch gekennzeichnet, dass** ein konstanter Fehlalarmraten(CFAR)-Algorithmus unter anderem zum Entfernen von signifikanten Punkten, die vorbestimmte Kriterien für einen Breitbandstörer nicht erfüllen, verwendet wird.

3. Verfahren nach Anspruch 1 oder 2, **dadurch gekennzeichnet, dass** in einem Fitprozess während des Beurteilungsschritts mindestens eine Fitfunktion für die signifikanten Punkte bestimmt wird, um zu bestimmen, ob das Störsignal ein lineares Chirpsignal, ein nichtlineares Chirpsignal oder ein zufälliger Abschnitt eines gewünschten Signals ist.

4. Verfahren nach Anspruch 3, **dadurch gekennzeichnet, dass** der Fitprozess ein zwei Schritte umfassender Prozess ist, wobei Fitfunktionen mindestens zweimal gefittet werden.

5. Verfahren nach Anspruch 3 oder 4, **dadurch gekennzeichnet, dass** die Abweichungen der signifikanten Punkte mit Bezug auf die erste Fitfunktion bestimmt werden.

6. Verfahren nach Anspruch 5, **dadurch gekennzeichnet, dass** eine vordefinierte Anzahl von signifikanten Punkten, die die kleinste Abweichung aufweisen, bestimmt werden, insbesondere 80% der signifikanten Punkte.

7. Verfahren nach Anspruch 5 oder 6, **dadurch gekennzeichnet, dass** die signifikanten Punkte, die die kleinste Abweichung von der ersten Fitfunktion aufweisen, mit einer zweiten Fitfunktion erneut gefittet werden.

8. Verfahren nach Anspruch 7, **dadurch gekennzeichnet, dass** die Abweichungen aller signifikanten Punkte mit Bezug auf die zweite Fitfunktion bestimmt werden.

9. Verfahren nach einem der Ansprüche 5 bis 8, **dadurch gekennzeichnet, dass** signifikante Punkte, die mit Bezug auf die Fitfunktion eine Abweichung aufweisen, die höher ist als ein voreingestellter Wert, entfernt werden.

10. Verfahren nach einem der Ansprüche 3 bis 9, **dadurch gekennzeichnet, dass** als Fitfunktionen quadratische Funktionen verwendet werden.

11. Verfahren nach einem der vorhergehenden Ansprüche, **dadurch gekennzeichnet, dass** eine Schwellwertanzahl für signifikante Punkte bestimmt wird, wobei alle signifikanten Punkte entfernt werden, wenn diese Schwellwertanzahl nicht erreicht wurde.

12. Verfahren nach einem der vorhergehenden Ansprüche, **dadurch gekennzeichnet, dass** davon ausgegangen wird, dass nach dem Beurteilungsschritt verbleibende signifikante Punkte zu einem Störer gehören, wobei diese signifikanten Punkte durch ein Zufallsrauschen ersetzt werden.

13. Verfahren nach einem der vorhergehenden Ansprüche, **dadurch gekennzeichnet, dass** die Schritte vollautomatisch durchgeführt werden.

14. Detektionssystem (10), wobei das Detektionssystem (10) eine Verarbeitungseinheit (12) umfasst, die dazu ausgelegt ist, ein Verfahren nach einem der Ansprüche 1 bis 13 durchzuführen.

## Revendications

1. Procédé pour la détection d'au moins un émetteur brouilleur à large bande avec les étapes suivantes :
a) la détermination d'une aire temps-fréquence de signaux entrants au moyen d'un spectrogramme de signaux entrants,
b) l'utilisation d'un aplatissement spectral de sorte qu'une valeur d'aplatissement spectral soit calculée pour chaque canal de fréquence des signaux entrants,
c) l'identification des canaux de fréquence significatifs qui pourraient comprendre des points de signal d'au moins un émetteur brouilleur à large bande possible dans l'aire temps-fréquence par l'étude des valeurs d'aplatissement spectral calculées des canaux de fréquence significatifs pendant l'aplatissement spectral,
d) la réalisation d'une analyse dans le domaine temporel afin d'identifier des points significatifs des canaux de fréquence significatifs qui ont été précédemment étudiés par aplatissement spectral, et
e) l'évaluation des points significatifs afin de déterminer si ces points significatifs correspondent à au moins un émetteur brouilleur à large bande, dans lequel des points significatifs qui ne satisfont pas à des critères prédéterminés pour un émetteur brouilleur à large bande sont éliminés pendant et/ou après l'étape d'évaluation.

2. Procédé selon la revendication 1, **caractérisé en ce qu'**un algorithme de taux de fausse alarme constant (CFAR) est entre autres utilisé pour l'élimination de points significatifs qui ne satisfont pas à des critères prédéterminés pour un émetteur brouilleur à large bande.

3. Procédé selon la revendication 1 ou 2, **caractérisé en ce qu'**au moins une fonction d'ajustement est déterminée pour les points significatifs dans un processus d'ajustement pendant l'étape d'évaluation afin de déterminer si le signal brouilleur est un signal de piaulement linéaire, un signal de piaulement non linéaire ou une partie aléatoire d'un signal utile.

4. Procédé selon la revendication 3, **caractérisé en ce que** le processus d'ajustement est un processus en deux étapes dans lequel des fonctions d'ajustement sont ajustées au moins deux fois.

5. Procédé selon la revendication 3 ou 4, **caractérisé en ce que** les écarts des points significatifs par rapport à la première fonction d'ajustement sont déterminés.

6. Procédé selon la revendication 5, **caractérisé en ce qu'**un nombre prédéfini de points significatifs ayant le plus faible écart sont déterminés, en particulier 80 % des points significatifs.

7. Procédé selon la revendication 5 ou 6, **caractérisé en ce que** les points significatifs ayant le plus faible écart par rapport à la première fonction d'ajustement sont ajustés à nouveau avec une seconde fonction d'ajustement.

8. Procédé selon la revendication 7, **caractérisé en ce que** les écarts de tous les points significatifs par rapport à la seconde fonction d'ajustement sont déterminés.

9. Procédé selon l'une quelconque des revendications 5 à 8, **caractérisé en ce que** des points significatifs qui possèdent un écart par rapport à la fonction d'ajustement qui est supérieur à une valeur prédéfinie sont éliminés.

10. Procédé selon l'une quelconque des revendications 3 à 9, **caractérisé en ce que** des fonctions quadratiques sont utilisées comme fonctions d'ajustement.

11. Procédé selon l'une quelconque des revendications précédentes, **caractérisé en ce qu'**un nombre seuil de points significatifs est prédéterminé, dans lequel tous les points significatifs sont éliminés si ce nombre seuil n'a pas été atteint.

12. Procédé selon l'une quelconque des revendications précédentes, **caractérisé en ce que** les points significatifs subsistant encore après l'étape d'évaluation sont considérés comme appartenant à un émetteur brouilleur dans lequel ces points significatifs sont remplacés par du bruit aléatoire.

13. Procédé selon l'une quelconque des revendications précédentes, **caractérisé en ce que** les étapes sont réalisées de manière complètement automatique.

14. Système de détection (10) dans lequel le système de détection (10) comprend une unité de traitement (12) qui est configurée pour réaliser un procédé selon l'une quelconque des revendications 1 à 13.
